# EUROPÄISCHE PATENTSCHRIFT

(11) **EP 4 049 806 B1**
(45) Veröffentlichungstag und Bekanntmachung des Hinweises auf die Patenterteilung: **06.03.2024**
(21) Anmeldenummer: 21212034.9
(22) Anmeldetag: 02.12.2021
(51) Int. Cl.: B25J 9/16, B65G 1/137, B65G 47/91, B65G 61/00

(54) **KOMMISSIONIERROBOTER MIT OPTIMIERTER TRAJEKTORIE UND VERFAHREN ZUM STEUERN EINES KOMMISSIONIERROBOTERS**
PICKING ROBOT WITH OPTIMIZED TRAJECTORY AND METHOD FOR CONTROLLING A PICKING ROBOT
ROBOTS DE PRÉPARATION DE COMMANDES À TRAJECTOIRE OPTIMISÉE ET PROCÉDÉ DE COMMANDE D'UN ROBOT DE PRÉPARATION DE COMMANDES

(30) Priorität: 26.02.2021 DE 102021104773
(43) Veröffentlichungstag der Anmeldung: 31.08.2022
(73) Patentinhaber: IGZ Ingenieurgesellschaft für logistische Informationssysteme mbH, 95685 Falkenberg (DE)
(72) Erfinder: Zrenner, Johann, 95685 Falkenberg (DE)
(74) Vertreter: Strehl Schübel-Hopf & Partner

(56) Entgegenhaltungen:
- WO-A1-2019/206924
- US-A1- 2020 078 941
- US-A1- 2020 306 964
- Knapp: "KNAPP - Pick-it-Easy Robot", , 14 October 2020 (2020-10-14), XP093006902, Retrieved from the Internet: URL:https://www.youtube.com/watch?v=frAG86 OfJ-o&t=35s [retrieved on 2022-12-12]

## Beschreibung

Die Erfindung betrifft einen Kommissionierroboter nach dem Oberbegriff des Anspruchs 1 und ein Verfahren zum Steuern eines solchen Kommissionierroboters.

Beim Schlichten, d.h. Ablegen von Artikeln in einem Kommissionier-Zielbehälter, kann eine Packdichte insbesondre dadurch erhöht werden, dass Spalte zwischen benachbarten Artikeln bzw. zwischen einem Artikel und einer Behälterwand vermieden werden.

Trotz der bemerkenswerten Fortschritte beim Kommissionieren mit Robotern sind menschliche Kommissionierer Robotern beim Optimieren der Schlichtmuster aktuell immer noch überlegen. Dies hat vielfältige Gründe. Insbesondere bei Kommissionierrobotern mit Sauggreifern liegt einer der Gründe darin, dass aufgrund der intrinsischen Elastizität des Sauggreifers ein Pendeln des Artikels am Sauggreifer unvermeidlich ist. Wenn der Artikel nah an einer Wand des Behälters oder an einem benachbarten Artikel abgelegt werden soll, besteht daher das Risiko, dass eine Kante des Artikels aufgrund der Pendelbewegung mit dem oberen Rand der Behälterwand oder dem benachbarten Artikel kollidiert, und zwar selbst dann, wenn die Trajektorie des Greifers völlig vertikal verläuft und die Abmessungen des Artikels an sich ein Ablegen erlauben würden.

Um derartige Kollisionen zu vermeiden, werden nach dem Stand der Technik beim robotergestützten Kommissionieren die Artikel in der Regel mit einem Sicherheitsabstand von der Behälterwand bzw. vom benachbarten Artikel abgelegt. Dies führt unweigerlich zu einer geringeren Packdichte und kann zudem negative Auswirkungen auf die Statik des Stapels haben.

In der DE 10 2016 212 141 A1 werden Kollisionen durch schwingende, am Greifer hängende Artikel dadurch vermieden, dass das letzte Glied des Roboters durch ein Arretierungsmittel "versteift" werden kann, um ein unkontrolliertes Hin und Herschwingen des gegriffenen Bauteils zu stoppen. Ein derartiges Versteifen ist aber bei intrinsisch elastischen Sauggreifern nicht möglich.

In der DE 202018101231 U1 wird vorgeschlagen, den Greifpunkt des Greifers so zu wählen, dass es nach dem Anheben möglichst nicht zu einem Nachpendeln kommt.

Das Dokument DE 102012104194B4 betrifft einen Roboter mit einer "selbstlernenenden" Steuerung, die Trajektorien so plant, dass unterwünschte Schwingungen gedämpft werden bzw. gar nicht auftreten. Ähnliches ist in der DE 102017124182 B4 beschrieben. Dort wird vorgeschlagen, die zum "Auspendeln" nötige Wartezeit so zu bestimmen, dass sie so kurz wie möglich aber so lang wie nötig ist. Trotz der dort vorgeschlagenen Optimierungen bleibt das Auspendelnlassen zeitaufwändig und führt zu einem verringerten Durchsatz.

In der WO 2020072101 A1 wird ein Hybrid-Verfahren aus automatischem und menschlichem Kommissionieren vorgeschlagen in dem das Umschlichten - z.B. zum Schließen eines Spalts zwischen zwei Artikeln - von zuvor von einem Roboter abgelegten Artikeln von einem menschlichen Kommissionierer übernommen wird, was zeitaufwändig ist und zu einem verringerten Durchsatz führt.

Das Dokument DE 10 2018 128 784 A1 offenbart eine robotergestütztes Kommissioniersystem welches ein anzulegendes Objekt an einer Begrenzungswand entlangführt und gegebenenfalls bereits zuvor abgelegte Objekte mit dem neuen Objekt zur Seite schiebt, um eine hohe Packungsdichte zu erreichen.

Das Dokument US2020078941A1 offenbart einen Kommissionierroboter nach dem Oberbegriff des Anspruchs 1. Weitere gattungsgemäße Kommissionierroboter sind in der WO 2019/206924 A1 und der US 2020/306964 A1 offenbart.

Der Erfindung liegt die Aufgabe zugrunde, einen Kommissionierroboter und ein Verfahren zum Steuern eines Kommissionierroboters bereitzustellen, die bei hohem Durchsatz eine hohe Packdichte ermöglichen.

Die Aufgabe wird gelöst durch einen Kommissionierroboter mit den Merkmalen des Anspruchs 1 und durch und ein Verfahren zum Steuern eines Kommissionierroboters nach dem Oberbegriff des Anspruchs 10.

Vorteilhafte Ausgestaltungen der Erfindung ergeben sich aus den Unteransprüchen.

Die Erfindung betrifft einen Kommissionierroboter mit einem Sauggreifer zum Greifen eines Artikels, mit wenigstens einer 3D-Kamera zum Erfassen eines Zielbehälters und einer Steuerung zum Bestimmen einer Trajektorie des Sauggreifers zum Aufnehmen eines Artikels aus einem Quellbehälter und zum Ablegen des Artikels in dem Zielbehälter.

Es wird vorgeschlagen, dass die Steuerung dazu ausgelegt ist, einen Ablageplatz des Artikels im Zielbehälter zu bestimmen, wenigstens eine Begrenzungswand des Ablageplatzes im Zielbehälter zu bestimmen und die Trajektorie so zu bestimmen, dass sich der Artikel in einem Endabschnitt der Trajektorie an die Begrenzungswand annähert oder dass der Artikel in einem Beruhigungsabschnitt der Trajektorie die Begrenzungswand berührt. Durch die erfindungsgemäße Führung der Trajektorie kann erreicht werden, dass eine Pendelbewegung des Artikels an der Begrenzungswand abgebremst wird, so dass Lücken beim nachfolgenden Schlichten an der finalen Zielposition vermieden werden. Auf diese Wiese wird eine höherer Packdichte erreicht.

Die Begrenzungswand kann je nach Situation die Seitenfläche eines dem Ablageplatz benachbarten, zuvor abgelegten Artikels sein oder die Innenwand des Zielbehälters.

Der Zielbehälter kann insbesondere ein Versandkarton, eine Kunststoffbox, Gitterbox oder anderer geeigneter Ladungsträger sein. Quell- und Zielbehälter werden insbesondere mit einer Fördertechnik an- und abtransportiert. Sowohl die Steuerung des Kommissionierroboters als auch die Steuerung der Fördertechnik werden vorzugsweise von einer zentralen Steuerung eines Logistiksystems koordiniert bzw. kontrolliert.

Gemäß der Erfindung wird vorgeschlagen, dass die Steuerung dazu ausgelegt ist, die Trajektorie so zu bestimmen, dass sich der Artikel in einem dem Endabschnitt vorausgehenden Absenkabschnitt nach vertikal unten bewegt und dabei einen Abstand zur Begrenzungswand einhält. Dadurch kann auch bei hohen Begrenzungswänden eine Kollision sicher vermieden werden.

Gemäß der Erfindung ist die Steuerung ferner dazu ausgelegt, die Trajektorie so zu bestimmen, dass der Artikel im Absenkabschnitt horizontal um einen Absenkabstand gegenüber dem Ablageplatz versetzt ist. Durch das Einhalten des Absenkabstands kann eine Kollision auch bei pendelnden oder schräg stehenden Artikeln sicher vermieden werden. Der Absenkabstand beträgt bei Artikeln mit typischen Tiefen- und Breitenabmessungen zwischen 5 und 20 cm etwa 1 - 3 cm, allgemein zwischen 5 und 15 % der aus den Stammdaten ermittelten Länge bzw. Breite, wobei der Absenkabstand in der Tiefenrichtung vorzugsweise abhängig von der Tiefe und der Absenkabstand in der Breitenrichtung vorzugsweise abhängig von der Breite berechnet wird. Erfindungsgemäß wird der Absenkabstand auch abhängig von der Höhe des Artikels berechnet werden, beispielsweise als eine maximale Auslenkung bei einem maximalen Pendelwinkel.

In einer Weiterbildung der Erfindung schlägt der Erfinder vor, einen im Bereich des Quellbehälters angeordneten, horizontal ausgerichteten Sensor zum Erfassen einer Höhe des Artikels beim Aufnehmen des Artikels aus dem Quellbehälter vorzusehen, wobei die Steuerung dazu ausgelegt ist, einen Startpunkt des Endabschnitts, d.h. den Beginn der Annäherung an die Begrenzungswand, abhängig von der erfassten Höhe zu bestimmen. Durch die genaue Kenntnis der Höhe des Artikels kann der Endpunkt der Trajektorie, an dem der Artikel möglichst sanft im Zielbehälter abgestellt wird, berechnet werden. Der Startpunkt kann dann so berechnet werden, dass eine Neigung des Endabschnitts gegenüber der Vertikalen einen vorgegebenen Wert nicht übertrifft. Die horizontal ausgerichtete Sensoranordnung ist in einer besonders vorteilhaften Ausgestaltung der Erfindung als Flächenscanner, wie zum Beispiel als 2D-LiDAR-Sensor, oder Kamera ausgebildet und überwacht insbesondere die gesamte Öffnung des Quellbehälters.

In einer vorteilhaften Ausgestaltung der Erfindung wird vorgeschlagen, dass die Steuerung dazu ausgelegt ist, die Trajektorie so zu bestimmen, dass der Artikel in einem Endpunkt des Endabschnitts der Trajektorie die Begrenzungswand berührt, insbesondere so, dass er genau in einen Winkel zwischen Behälterboden und Begrenzungswand abgesetzt wird oder dass er wenige Millimeter bis höchstens einige Millimeter an der Begrenzungswand herabgleitet. Dabei kann in einer Ausgestaltung der Erfindung der Artikel in einem Endpunkt des Endabschnitts der Trajektorie gegen die Begrenzungswand gedrückt werden, beispielsweise indem der angesteuerte Ablageplatz so bestimmt wird, dass er geringfügig, d.h. um einem Versatz von weniger als 1 - 2 cm, in die Begrenzungswand hineinragt. Der letztgenannte Versatz kann abhängig von der Elastizität des Sauggreifers so bestimmt werden, dass im statistischen Mittel ein gewünschter Anpressdruck erreicht wird. In einer Ausgestaltung kann der Versatz nur dann erzeugt bzw. berücksichtigt werden, wenn die Begrenzungswand die Seitenfläche eines benachbarten Artikels ist und entfallen, wenn es sich um die Wand des Zielbehälters handelt. Durch das Ablegen des Artikels mit dem Anpressdruck kann der Stapel nachverdichtet werden, und ggf. zwischen bereits abgelegten Artikeln vorhandene Lücken können durch Nachrücken geschlossen werden.

Ferner wird vorgeschlagen, dass die Steuerung dazu ausgelegt ist, zwei Begrenzungswände des Ablageplatzes im Zielbehälter zu bestimmen, die einen Innenwinkel bilden, und die Trajektorie so zu bestimmen, dass sich der Artikel in einem Endabschnitt der Trajektorie in der Richtung eines Scheitelpunkts des Innenwinkels bewegt. Dabei kann die Trajektorie insbesondere so berechnet werden, dass mit Kenntnis der Breite und Tiefe des Artikels die Koordinaten eines Eckpunkts des Artikels berechnet werden und der Eckpunkt des Artikels in den Scheitelpunkt des Innenwinkels geführt wird.

Gemäß der Erfindung wird vorgeschlagen, dass die Steuerung dazu ausgelegt ist, eine Höhe der Begrenzungswand zu bestimmen und einen Startpunkt des Endabschnitts abhängig von der Höhe der Begrenzungswand zu bestimmen, insbesondere so, dass er auf oder unterhalb der Höhe der Begrenzungswand liegt. Dadurch können Kollisionen durch ein verfrühtes Annähern des Artikels an die Begrenzungswand vermieden werden.

In einer vorteilhaften Ausgestaltung der Erfindung wird vorgeschlagen, dass die Steuerung dazu ausgelegt ist, die Trajektorie als eine krummlinige Interpolation aus Bahnkurvenpunkten zu bestimmen. Dadurch können ruckartige Beschleunigungen und daraus folgendes Nachpendeln des Artikels an Eckpunkten der Trajektorie vermieden werden.

Ferner wird vorgeschlagen, den Kommissionierroboter mit einem Greifarm mit einem schwenkbaren oder rotierbaren Endglied auszustatten, wobei die Annäherung des Artikels an die Begrenzungswand im Endabschnitt durch eine Schwenkbewegung des Endglieds erzeugt wird. Ein schwenkbares oder rotierbares Endglied kann als schnell reagierender Freiheitsgrad mit geringer Trägheit effektiv zum Steuern des Endabschnitts der Trajektorie genutzt werden.

Eine Pendelbewegung des Artikels kann ferner durch eine entsprechende Pendelbewegung des Endglieds aufgenommen und verstärkt oder gedämpft werden. Insbesondere kann die Steuerung dazu ausgelegt sein, das Endglied im Verlauf einer Schwenkbewegung zwischen dem Quellbehälter und dem Zielbehälter so zu steuern, dass ein Pendeln des Artikels im Vergleich zu einer Steuerung mit unbeweglichem Endglied reduziert wird, beispielswiese durch Ansteuern einer gegenphasigen Bewegung oder durch Schrägstellen des Sauggreifers während eines Beschleunigungs- und/oder Abbremsvorgangs.

In einer vorteilhaften Ausgestaltung der Erfindung wird vorgeschlagen, dass die Steuerung dazu ausgelegt ist, aus den mit Hilfe der 3D-Kamera erfassten Daten eine Lücke zwischen Artikeln im Zielbehälter und/oder eine Lücke zwischen einem Artikel und einer Wand des Zielbehälters zu erkennen und, falls eine Lücke erkannt wurde, wenigstens einen Artikel in dem Zielbehälter mit Hilfe des Sauggreifers so zu verschieben, dass die Lücke geschlossen wird, bevor weitere Artikel in den Zielbehälter abgelegt werden. Dadurch kann die Packdichte weiter erhöht werden. Das Verschieben der Artikel kann durch eine Verschiebeplatte oder andere Struktur an einer Seite des Sauggreifers oder eines speziellen Werkzeugs oder durch Greifen und Ablegen mit dem Sauggreifer erfolgen.

Ein weiterer Aspekt der Erfindung betrifft ein Verfahren zum Steuern eines Kommissionierroboters mit einem Sauggreifer zum Greifen eines Artikels und mit wenigstens einer 3D-Kamera zum Erfassen eines Zielbehälters, wobei das Verfahren das Bestimmen einer Trajektorie des Sauggreifers zum Aufnehmen eines Artikels aus einem Quellbehälter und zum Ablegen des Artikels in dem Zielbehälter umfasst.

Es wird vorgeschlagen, dass das Verfahren das Bestimmen eines Ablageplatzes des Artikels im Zielbehälter, das Bestimmen wenigstens einer Begrenzungswand im Zielbehälter und das Bestimmen der die Trajektorie derart, dass sich der Artikel in einem Endabschnitt der Trajektorie an die Begrenzungswand annähert oder dass der Artikel in einem Beruhigungsabschnitt der Trajektorie die Begrenzungswand berührt, umfasst.

Weitere Merkmale und Vorteile ergeben sich aus der folgenden Figurenbeschreibung. Die gesamte Beschreibung, die Ansprüche und die Figuren offenbaren Merkmale der Erfindung in speziellen Ausführungsbeispielen und Kombinationen.

Dabei zeigen:
Fig. 1 eine vollautomatische Kommissionieranlage mit einem Kommissionierroboter nach einem ersten Ausführungsbeispiel der Erfindung;
Fig. 2a einen generischen Ablagevorgang eines Artikels in einem Zielbehälter ohne hinreichenden Sicherheitsabstand;
Fig. 2b einen Ablagevorgang mit hinreichendem Sicherheitsabstand;
Fig. 3 den Endabschnitt der Trajektorie eines Kommissionierroboters im Rahmen eines Ablagevorgangs gemäß der Erfindung;
Fig. 4 den Endabschnitt der Trajektorie in einer dreidimensionalen Darstellung;
Fig. 5 eine schematische Darstellung zur Ablage eines Artikels neben einem bereits zuvor abgelegten Artikel;
Fig. 6a und Fig. 6b eine schematische Darstellung zur Bestimmung einer Trajektorie mit Beruhigungsabschnitt;
Fig. 7 eine schematische Darstellung zur Annäherung des Artikels an eine Begrenzungswand durch Schwenken des Endglieds des Greifarms;
Fig. 8a und Fig. 8b schematische Darstellungen zum Nach-Schlichten des Packmusters; und
Fig. 9a und Fig. 9b schematische Darstellung zur Bestimmung einer Trajektorie mit Ausgleichsbewegungen eines schwenkbaren Endglieds.

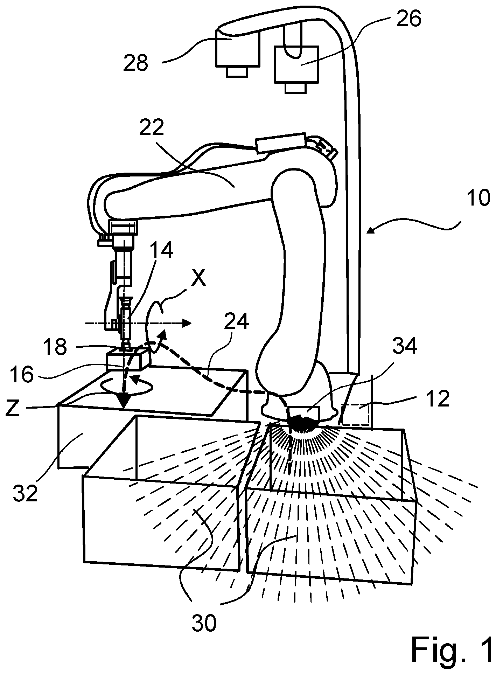

Fig. 1 zeigt ein erstes Ausführungsbeispiel der Erfindung. Es umfasst einen Kommissionierroboter 10 mit Greifarm 22 und mehreren am Ende des Greifarms 22 befestigten Sauggreifern 18.

Der Kommissionierroboter 10 ist Teil einer vollautomatischen Kommissionieranlage und steht an zwei in einem Winkel von 90° zueinander angeordneten Fördertechnikspuren (nicht dargestellt) zum An- und Abtransportieren von Quellbehältern 30 und Zielbehältern 32. Der Kommissionierroboter 10 entnimmt gemäß einem Kommissionierauftrag Artikel 16 aus einem Quellbehälter 30 und legt ihn in einen Zielbehälter 32 ab, beispielswiese in einen Versandkarton. Je nach Konstellation können mehrere Quellbehälter 30 und/oder Zielbehälter 32 in der Reichweite des Kommissionierroboters 10 abgestellt werden, um unnötige Ein- und Auslagerungsvorgänge einzusparen. Sowohl eine Steuerung 12 des Kommissionierroboters 10 als auch die Steuerung der Fördertechnik werden vorzugsweise von einer zentralen Steuerung eines Logistiksystems koordiniert bzw. kontrolliert.

Der Greifarm 22 mit dem Sauggreifer 18 greift dabei jeweils einen Artikel 16 und legt ihn im Zielbehälter 32 ab. Dazu umfasst er ein rotierbares Endglied 14 mit einem oder mehreren, für verschiedene Kategorien von Artikeln 16 optimierten Sauggreifern 18. Das Endglied 14 ist um eine horizontale Achse X und um eine vertikale Achse Z drehbar.

Fener umfasst der Kommissionierroboter 10 eine erste 3D-Kamera 26 zum Erfassen des Quellbehälters 30 und eine zweite 3D-Kamera 28 zum Erfassen des Zielbehälters 32 und die Steuerung 12. Mittels geeigneter Bildverarbeitungssoftware erkennt die Steuerung 12 eine Greifposition des nächsten zu greifenden Artikels 16 im Quellbehälter 30, greift den Artikel 16, hebt ihn an, schwenkt den Greifarm 22 um etwa 90° über den Zielbehälter 32 und legt ihn auf einem Ablageplatz im Zielbehälter 32 ab. Die Trajektorie 24, auf der sich der Sauggreifer 18 zwischen der Greifposition und dem Ablageplatz bewegt, wird von der Steuerung 12 abhängig von der im Quellbehälter 30 und Zielbehälter 32 vorgefundenen Konfiguration berechnet und optimiert.

Da die Quellbehälter 30 in der Regel sortenrein bestückt sind, kann die Steuerung 12 die Abmessungen und das Gewicht des Artikels 16 aus den in einer Datenbank des Logistiksystems hinterlegten Stammdaten lesen. Sofern die Orientierung, in der die Artikel 16 im Quellbehälter 30 liegen, unbekannt ist, kann diese unter Zuhilfenahme der 3D-Kamera 26 und/oder eines weiteren Sensors ermittelt werden.

Die Bestimmung des Ablageplatzes erfolgt unter Zuhilfenahme der zweiten, über dem Zielbehälter 32 angeordneten 3D-Kamera 28, aus deren Daten mit Hilfe einer geeigneten Bildverarbeitungssoftware ein geeigneter Ablageplatz für den Artikel 16 ermittelt wird, d.h. ein hinreichend großer Ablageplatz auf dem Behälterboden oder auf einem bereits vorhandenen Stapel von Artikeln 16 im Zielbehälter 32.

Bei der Bestimmung des Ablageplatzes kann aus Gründen, die im Folgenden erläutert werden, auf den gemäß dem Stand der Technik erforderlichen Sicherheitsabstand S zum benachbarten Artikel 16 verzichtet werden.

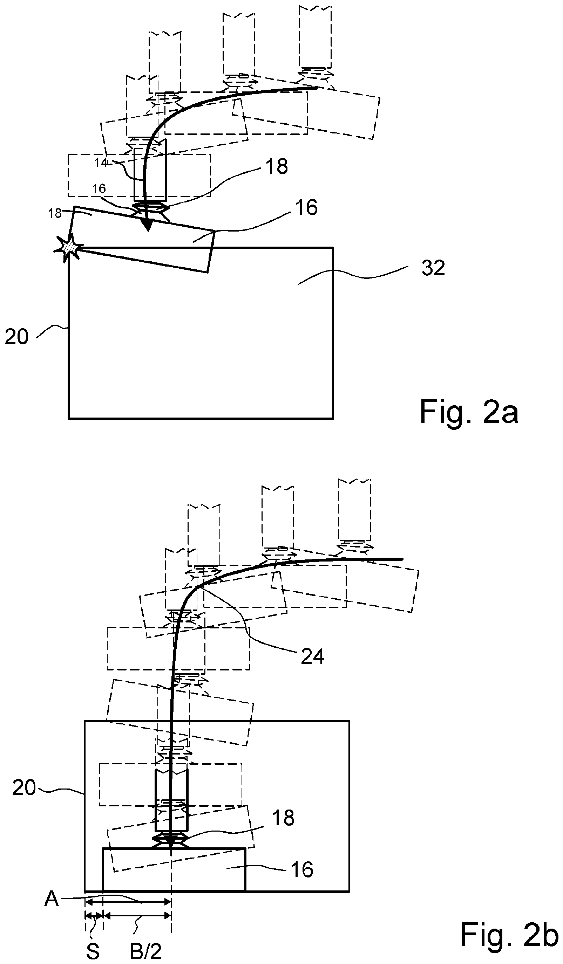

Die Figuren 2a und 2b zeigen schematisch einen generischen Ablagevorgang eines Artikels 16 in einem Zielbehälter 32. Figur 2a illustriert eine Kollisionsgefahr bei nicht hinreichendem Sicherheitsabstand S, Fig. 2b illustriert den Ablagevorgang mit hinreichendem Sicherheitsabstand S.

Der Sauggreifer 18 des Greifarms 22 und auch eine Verpackung des Artikels 16 haben immer eine gewisse Elastizität. Die horizontalen Beschleunigungen während des Transports vom Quellbehälter 30 zum Zielbehälter 32 führen daher praktisch unvermeidlich zu Pendelschwingungen, insbesondere wenn der Massenschwerpunkt des Artikels 16 tief unter dem Sauggreifer 18 hängt.

Nach dem Stand der Technik endet die Trajektorie 24 mit einem vertikal nach unten verlaufenden Absenkabschnitt 24a, wobei die horizontale Position des Sauggreifer-Mittelpunkts einen Abstand A von der Begrenzungswand 20, d.h. der Innenwand des Zielbehälters 32, einhält, der der Summe aus einer halben Breite B des Artikels 16 und einem Sicherheitsabstand S entspricht: A = B/2 + S. Wenn, wie in Fig. 2a dargestellt, der Sicherheitsabstand S zu klein gewählt wird und der Artikel 16 starke Pendelschwingungen zeigt, kann es zu Kollisionen mit der Oberkante der Begrenzungswand 20 kommen. Der Sicherheitsabstand S muss daher nach dem Stand der Technik so groß gewählt werden, dass er wenigstens der Amplitude der Pendelschwingungen zuzüglich eines weiteren Puffers entspricht, wobei der Puffer Ungenauigkeiten in der Kenntnis der Breite B des Artikels 16 und eine Schrägstellung des Artikels 16 in seiner Gleichgewichtslage, die sich durch einen Greifpunkt ergibt, der horizontal gegenüber dem Massenschwerpunkt des Artikels 16 versetzt sein kann, berücksichtigt.

Wenn hingegen der Artikel 16, wie in Fig. 2b dargestellt, mit einem hinreichenden Sicherheitsabstand S abgestellt wird, verbleibt eine dem Sicherheitsabstand S entsprechende Lücke zwischen dem Artikel 16 und der Begrenzungswand 20.

Die obigen Erläuterungen beziehen sich auf das Abstellen eines Artikels 16 unmittelbar neben einer Behälterwand, sind aber selbstverständlich auf das Abstellen eines Artikels 16 neben einem anderen, zuvor abgestellten Artikel anwendbar, wobei es dann um die Vermeidung von Kollisionen mit der Oberkante der durch eine Seitenfläche des dem Ablageplatz benachbarten, zuvor abgelegten Artikels gebildeten Begrenzungswand 20 geht. Nach dem Stand der Technik entstehen daher dem Sicherheitsabstand S entsprechende Lücken nicht nur zwischen den Artikeln 16 und der Behälterwand, sondern auch zwischen benachbarten Artikeln 16.

Durch die Lücken wird die Packdichte reduziert und auch die Statik bzw. Stabilität des Stapels im Zielbehälter 32 verschlechtert.

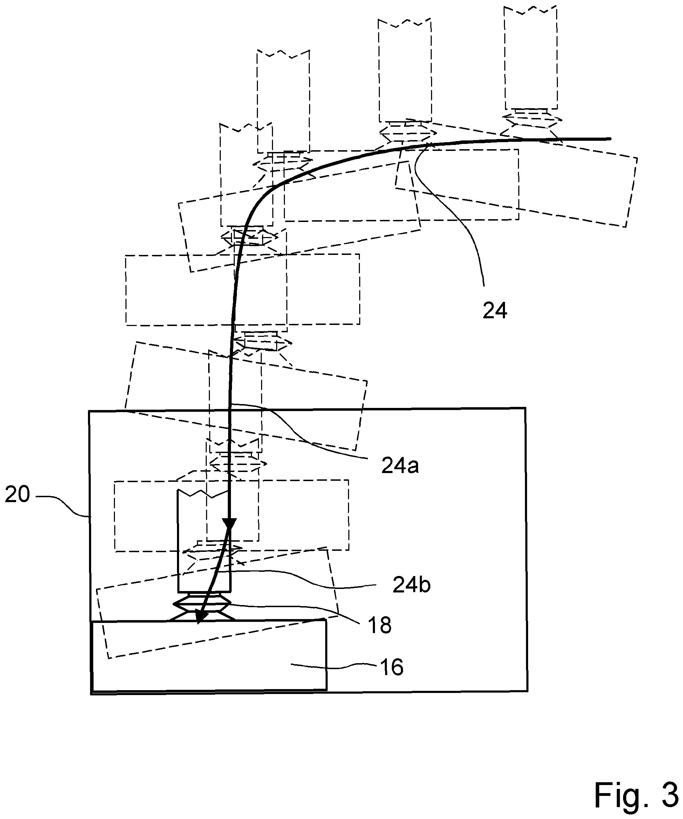

Fig. 3 zeigt schematisch den Endabschnitt 24b der Trajektorie 24 eines Kommissionierroboters 10 gemäß der Erfindung. Anstelle eines vertikal nach unten verlaufenden Absenkabschnitts 24a ist die Steuerung 12 nach der Erfindung durch eine entsprechende Software dazu ausgelegt, dass sich der Artikel 16 in einem Endabschnitt 24b der Trajektorie 24 an die Begrenzungswand 20 annähert. Der Ablageplatz kann dadurch so gewählt werden, dass kein Sicherheitsabstand S zur Begrenzungswand 20 eingehalten werden muss. Im Gegenteil kann der von der Steuerung 12 angesteuerte Ablageplatz sogar so gewählt werden, dass der abgelegte Artikel 12 mit etwas Druck gegen den benachbarten Artikel oder die Behälterwand geschoben wird, um eine hohe Packdichte zu erreichen und ggf. Greifungenauigkeiten auszugleihen.

Genauer gesagt wird die Trajektorie 24 so bestimmt, dass sich der Artikel 16 in einem dem Endabschnitt 24b vorausgehenden Absenkabschnitt 24a, in dem ein Sicherheitsabstand S bzw. Absenkabstand gemäß dem Stand der Technik eingehalten wird, nach vertikal unten bewegt und anschließend im Endabschnitt 24b auf einer schrägen Bahn zur Begrenzungswand 20 hinbewegt wird. Die Lage des Übergangs zwischen Absenkabschnitt 24a und Endabschnitt 24b wird von der Steuerung 12 so gewählt, dass er unterhalb der oberen Kante der Begrenzungswand 20 liegt.

Die Steuerung 12 bestimmt die Trajektorie 24 daher so, dass der Artikel 16 im Absenkabschnitt 24a horizontal um den Absenkabstand A gegenüber dem finalen Ablageplatz versetzt ist und nicht, wie im Stand der Technik, geradlinig über dem Ablageplatz abgesenkt wird.

Auch wenn die Trajektorie 24 in Fig. 3 als Polygonzug aus geradlinigen Teilstrecken dargestellt ist, sind die Trajektorien 24 in der Praxis auch durch geeignete Interpolationsverfahren geglättet. Insbesondere kann die Trajektorie 24 als eine krummlinige Interpolation aus Bahnkurvenpunkten bestimmt werden.

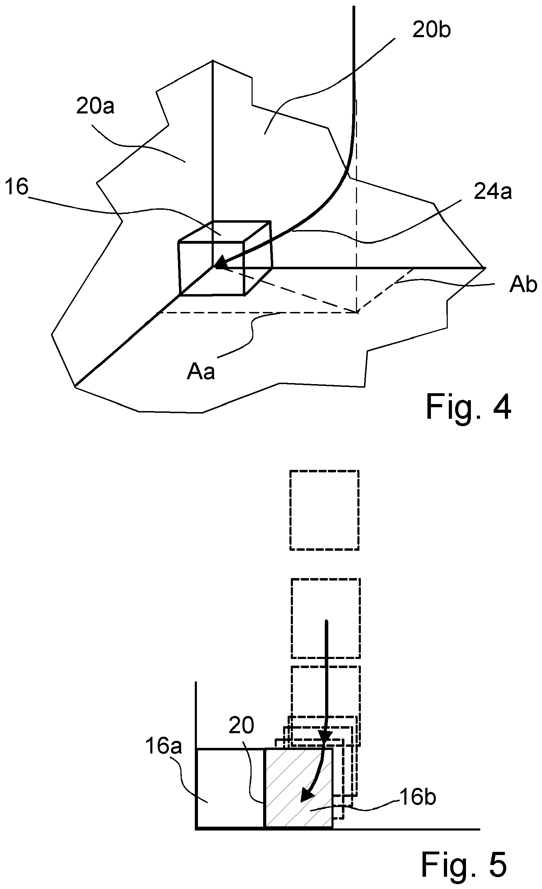

Auch wenn in der zweidimensionalen in Darstellung Fig. 3 die Annäherung an eine Begrenzungswand 20 dargestellt ist, wird in Fällen, in denen der Ablageplatz in einem aus zwei Begrenzungswänden 20a, 20b gebildeten Innenwinkel liegt, wie dies in Fig. 4 schematisch dargestellt ist, die Trajektorie 24 so geführt, dass sich der Artikel 16 im Endabschnitt 24b an beide Begrenzungswände 20a, 20b annähert. Im Absenkabschnitt 24a wird dann jeweils ein Absenkabstand Aa, Ab zu beiden Begrenzungswänden 20a, 20b eingehalten und im Endabschnitt 24b die Trajektorie 24 so geführt, dass der Artikel 16 in den Innenwinkel zwischen den Begrenzungswänden eingesetzt wird, insbesondere so, dass der Artikel 16 in einem Endabschnitt 24b der Trajektorie 24 in der Richtung eines Scheitelpunkts des Innenwinkels bewegt wird.

Das Abstellen eines Artikels 16b neben einem bereits zuvor abgestellten Artikel 16a ist schematisch in Fig. 5 dargestellt. In diesem Fall bildet nicht die Innenwand des Zielbehälters 32 sondern eine Seitenfläche des Artikels 16a die Begrenzungswand 20, an welche der Artikel 16 im Endabschnitt 24b der Trajektorie 24 angenähert wird.

Wieder Bezug nehmend auf Fig. 1 umfasst der Kommissionierroboter 10 ferner einen im Bereich des Quellbehälters 30 angeordneten, horizontal ausgerichteten Sensor 34 zum Erfassen einer Höhe des Artikels 16 beim Aufnehmen des Artikels 16 aus dem Quellbehälter 30. Die Steuerung 12 erfasst in der von dem Lidar-Flächensensor 34 überwachten Ebene (in Fig. 1 als Strahlenfächer dargestellt) angeordnete Gegenstände und der Signalpegel des Sensors 34 ändert sich sprunghaft, sobald der Sensor 34 über die überwachte Ebene hinausgehoben wurde. Aus der Position des Greifarms 22 in diesem Zeitpunkt errechnet die Steuerung 12 die Höhe H des Artikels 16.

Die Länge des Endabschnitts 24b der Trajektorie 24 wird abhängig von der so ermittelten Höhe H berechnet, insbesondere der Endpunkt wird so gewählt, dass die Annäherung an die Begrenzungswand 20 dann abgeschlossen ist, wenn der Boden des Artikels 16 den Boden des Zielbehälters 32 erreicht, so dass der Artikel 16 ohne oder mit nur sehr kleinem Abstand neben der Begrenzungswand 20 abgestellt wird, insbesondere so, dass der Artikel 16 in einem Endpunkt des Endabschnitts 24b der Trajektorie 24 die Begrenzungswand 20 berührt. Auch der Startpunkt des Endabschnitts 24b wird abhängig von der erfassten Höhe H bestimmt, so dass sich die Neigung des Endabschnitts 24b in einem vorgegebenen Bereich bewegt. Dabei wird der Startpunkt des Endabschnitts 24b nicht nur abhängig von der Höhe H des Artikels 16 sondern auch von der Höhe der Begrenzungswand 20 bestimmt, insbesondere so, dass er unterhalb der Oberkante der Begrenzungswand 20 liegt, da es ja um die Vermeidung von Kollisionen geht.

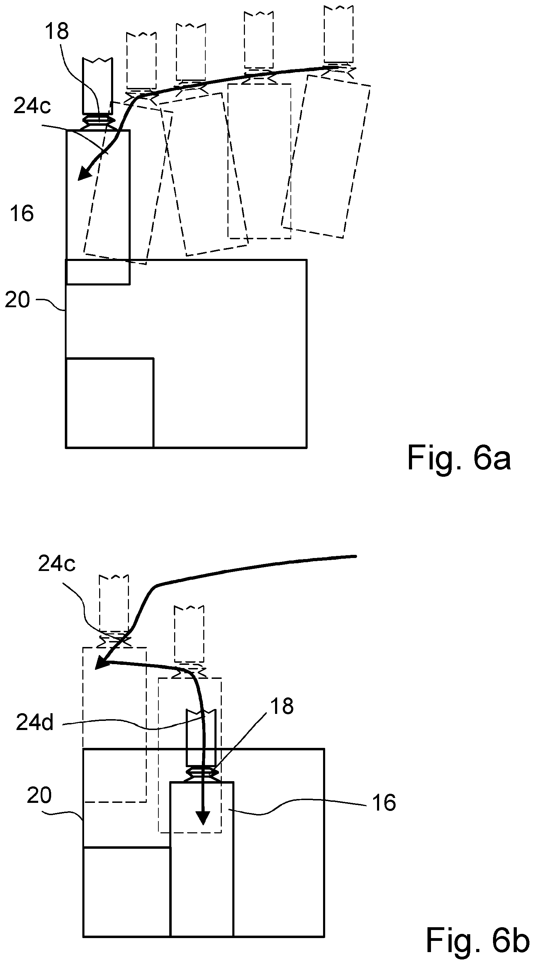

Die Figuren 6 - 9 zeigen ein weitere Ausführungsbeispiele der Erfindung. Um Wiederholungen zu vermeiden, beschränkt sich die nachfolgende Beschreibung dieser weiteren Ausführungsbeispiele im Wesentlichen auf Unterschiede zu dem ersten Ausführungsbeispiel der Erfindung.

Fig. 6a und Fig. 6b dargestellten Ausführungsbeispiel der Erfindung werden Pendelschwingungen des Artikels 16 dadurch reduziert, dass bestimmen und die Trajektorie 24 so bestimmt wird, dass sich der Artikel 16 in einem Beruhigungsabschnitt 24c der Trajektorie 24 die Begrenzungswand 20 berührt. Durch die Berührung wird die beim Beschleunigen und/oder Abbremsen des Greifarms erzeugte Pendelbewegung des Artikels 16 gestoppt. In einem nachfolgenden Ablageabschnitt (Fig. 6b) wird der Artikel 16 bzw. der Greifarm dann langsam bewegt, um keine neuen Pendelschwingungen zu erzeugen. Trotz der bereits durch die Berührung mit der Begrenzungswand 20 stark reduzierten Schwingungen kann der Artikel 16 optional in einem Endabschnitt des Ablageabschnitts gemäß Fig. 6b an die Begrenzungswand angenähert werden, wie dies im Zusammenhang mit Fig. 3 erläutert wurde (nicht dargestellt).

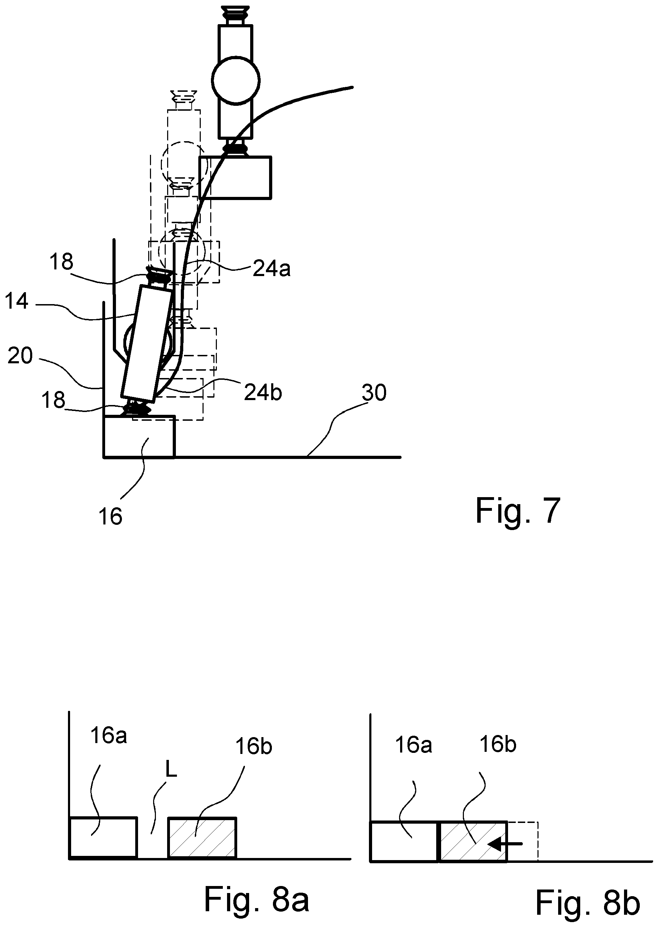

In dem in Fig. 7 dargestellten Ausführungsbeispiel der Erfindung wird die Annäherung des Artikels 16 an die Begrenzungswand 20 im Endabschnitt 24b teilweise durch eine Schwenkbewegung des Endglieds 14 erzeugt, das durch eine kurze Drehbewegung den Artikel 16 auf seinen Ablageplatz schlenzt. Die Gesamtbewegung des Greifarms 22 ist eine Kombination aus einer Annäherung eines Tragkörpers des rotierbaren Endglieds 14 und einer Rotation des Endglieds 14.

Fig. 8a und Fig. 8b zeigen schematische Darstellungen zum Nach-Schlichten des Packmusters. Falls trotz der oben genannten Maßnahmen Lücken L zwischen den Artikeln 16a, 16b bestehen bleiben und die Steuerung 12 dies aus den mit Hilfe der 3D-Kamera erfassten Daten erkennt, steuert die Steuerung 12 den Greifarm 22 so, dass ein bereits abgelegter Artikel 16b aus dem Zielbehälter 32 wieder gegriffen wird und ein Artikel 16b in dem Zielbehälter 32 mit Hilfe des Sauggreifers 18 so verschoben wird, dass die Lücke L geschlossen wird. Alternativ kann der Artikel mit dem Sauggreifer 18 oder einem anderen Werkzeug seitlich verschoben werden.

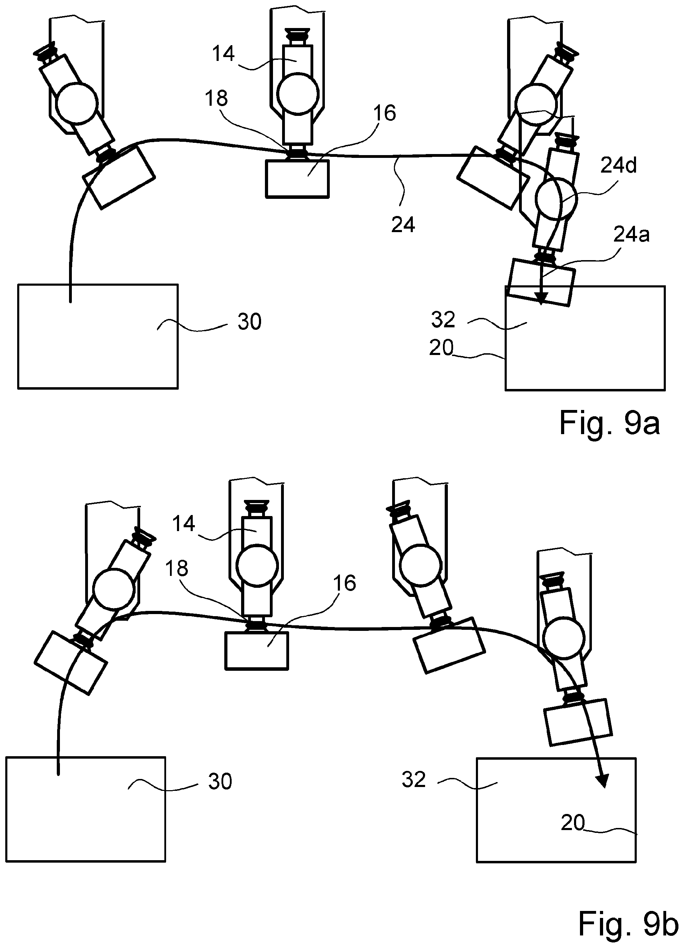

Fig. 9a und Fig. 9b zeigen jeweils eine schematische Darstellung zur Bestimmung einer Trajektorie mit Ausgleichsbewegungen eines schwenkbaren Endglieds 14. Während gemäß dem Stand der Technik das Endglied 14 mit dem Sauggreifer beim Überführen des Artikels 16 vom Quellbehälter 30 zum Zielbehälter in der Regel senkrecht bleibt und nur geschwenkt oder abgewinkelt wird, um schräg im Quellbehälter 30 liegende Artikel besser greifen zu können, wird das Endglied 14 in dem in Fig. 9a und Fig. 9b dargestellten Ausführungsbeispiel das Endglied 14 so gesteuert, dass ein Pendeln des Artikels 16 im Vergleich zu einer Steuerung mit unbeweglichem Endglied 14 reduziert wird.

In dem in Fig. 9a dargestellten Beispiel einer Trajektorie 24 wird das Endglied nach der Entnahme des Artikels 14 aus dem Quellbehälter 30 im Bereich des Übergangs zwischen vertikaler und horizontaler Bewegung des Sauggreifers 18 in Richtung des Zielbehälters 32 geschwenkt, so dass die horizontalen Trägheitskräfte des Artikels während der Beschleunigung teilwiese als in der Längsrichtung des Sauggreifers 18 wirkende Schubkräfte abgestützt werden und sich die ansonsten transversal auf den Sauggreifer 18 wirkenden Beschleunigungs- bzw. Trägheitskräfte in axial wirkende Schubkräfte verwandeln. Im Bereich des Übergangs zwischen horizontaler und vertikaler Bewegung beim Ablegen im Zielbehälter 30 wird das Endglied 14 in die entgegengesetzte Richtung geschwenkt, do dass die ansonsten transversal auf den Sauggreifer 18 wirkenden Bremskräfte in axial wirkende Gegenschubkräfte verwandeln. Die Trajektorie 24 des Sauggreifers 24 kann dazu, wie in Fig. 6a schematisch dargestellt, in einem Bereich 24a etwas übersteuert werden, beispielsweise um ein besseres Heranführen des Artikels 16 an eine dem Quellbehälter 30 zugewandte Begrenzungswand 20 des Zielbehälters 32 zu ermöglichen.

In dem in Fig. 9b dargestellten Beispiel einer Trajektorie 24 wird das Endglied 14 nach der Entnahme des Artikels 14 aus dem Quellbehälter 30 im Bereich des Übergangs zwischen vertikaler und horizontaler Bewegung des Sauggreifers 18 etwas hinter seiner Aufhängung am Greifarm hergeschleppt, so dass die horizontalen Trägheitskräfte des Artikels während der Beschleunigung teilwiese in in der Längsrichtung des Sauggreifers 18 wirkende Zugkräfte umwandeln. Im Bereich des Übergangs zwischen horizontaler und vertikaler Bewegung beim Ablegen im Zielbehälter 30 wird das Endglied 14 in die entgegengesetzte Richtung geschwenkt, so dass die ansonsten transversal auf den Sauggreifer 18 wirkenden Bremskräfte ebenfalls in axial wirkende Zugkräfte verwandeln. Die Trajektorie 24 des Sauggreifers 24 kann dazu, wie in Fig. 9b schematisch dargestellt, etwas flacher verlaufen, auch um ein besseres Heranführen des Artikels 16 an eine dem Quellbehälter 30 zugewandte Begrenzungswand 20 des Zielbehälters 32 zu ermöglichen.

Die Ausgleichbewegungen des Endglieds beim Beschleunigen und beim Abbremsen können auch kombiniert werden - beispielsweise kann ein Nachschleppen beim Herausheben gemäß Fig. 9b mit einem Übersteuern beim Ablegen gemäß Fig. 9a kombiniert werden. Die Optimale Wahl der Trajektorie kann von der Steuerung 12 abhängig vom Gewicht und den Abmessungen und der daraus berechenbaren Eigenfrequenz der Pendelschwingungen berechnet werden, beispielswiese mit Hilfe eines mathematischen Modells oder auch durch maschinelles Lernen, wobei im letztgenannten Fall eine Messung der Pendelschwingungen durch Kameraaufnahmen und/oder Sensoren im Sauggreifer vorteilhaft ist.

## Patentansprüche

1. Kommissionierroboter mit einem Sauggreifer (18) zum Greifen eines Artikels (16), mit wenigstens einer 3D-Kamera zum Erfassen eines Zielbehälters (32) und einer Steuerung (12) zum Bestimmen einer Trajektorie (24) des Sauggreifers (18) zum Aufnehmen eines Artikels (16) aus einem Quellbehälter (30) und zum Ablegen des Artikels (16) in dem Zielbehälter (32),
wobei die Steuerung (12) dazu ausgelegt ist, aus den Daten der 3D-Kamera (28) mit Hilfe einer Bildverarbeitungssoftware einen Ablageplatz des Artikels (16) im Zielbehälter (32) und wenigstens eine vertikale Begrenzungswand (20) im Zielbehälter (32) zu bestimmen und
**dadurch gekennzeichnet, dass**
die Steuerung ferner dazu ausgelegt ist, die Trajektorie (24) so zu bestimmen, dass sich der Artikel (16)
• in einem Absenkabschnitt (24a) nach vertikal unten bewegt und dabei einen horizontalen Absenkabstand (A) zur Begrenzungswand (20) einhält , so dass der Artikel (16) im Absenkabschnitt (24a) horizontal um den Absenkabstand (A) gegenüber dem Ablageplatz versetzt ist, und
• in einem Endabschnitt (24b) der Trajektorie (24), welcher dem Absenkabschnitt (24a) nachfolgt, an die Begrenzungswand (20) annähert oder dass der Artikel (16) in einem Beruhigungsabschnitt (24c) der Trajektorie (24) die Begrenzungswand (20) berührt,
• eine Höhe der Begrenzungswand (20) und eine Höhe H des Artikels (16) zu bestimmen und einen Startpunkt des Endabschnitts (24b) abhängig von der Höhe der Begrenzungswand (20) und der Höhe H des Artikels (16) so zu bestimmen, dass er auf oder unterhalb der Höhe der Begrenzungswand (20) liegt.

2. Kommissionierroboter nach Anspruch 1,
**gekennzeichnet durch**
einen oberhalb des Quellbehälters (30) angeordneten, horizontal ausgerichteten Sensor (34) zum Erfassen einer Höhe (H) des Artikels (16) beim Aufnehmen des Artikels (16) aus dem Quellbehälter (30), wobei die Steuerung (12) dazu ausgelegt ist, einen Startpunkt des Endabschnitts (24b) abhängig von der erfassten Höhe (H) zu bestimmen.

3. Kommissionierroboter nach einem der vorhergehenden Ansprüche,
**dadurch gekennzeichnet, dass**
die Steuerung (12) dazu ausgelegt ist, die Trajektorie (24) so zu bestimmen, dass der Artikel (16) in einem Endpunkt des Endabschnitts (24b) der Trajektorie (24) die Begrenzungswand (20) berührt.

4. Kommissionierroboter nach Anspruch 3,
**dadurch gekennzeichnet, dass**
die Steuerung (12) dazu ausgelegt ist, die Trajektorie (24) so zu bestimmen, dass der Artikel (16) in einem Endpunkt des Endabschnitts (24b) der Trajektorie (24) gegen die Begrenzungswand (20) gedrückt wird.

5. Kommissionierroboter nach einem der vorhergehenden Ansprüche,
**dadurch gekennzeichnet, dass**
die Steuerung (12) dazu ausgelegt ist, zwei vertikale Begrenzungswände des Ablageplatzes im Zielbehälter (32) zu bestimmen, die einen Innenwinkel bilden, und die Trajektorie (24) so zu bestimmen, dass sich der Artikel (16) in einem Endabschnitt (24b) der Trajektorie (24) in der Richtung eines Scheitelpunkts des Innenwinkels bewegt.
ausgelegt ist,.

6. Kommissionierroboter nach einem der vorhergehenden Ansprüche,
**dadurch gekennzeichnet, dass**
die Steuerung (12) dazu ausgelegt ist, die Trajektorie (24) als eine krummlinige Interpolation aus Bahnkurvenpunkten zu bestimmen.

7. Kommissionierroboter nach einem der vorhergehenden Ansprüche,
**gekennzeichnet durch**
einen Greifarm (22) mit einem schwenkbaren oder rotierbaren Endglied (14), wobei die Annäherung des Artikels (16) an die Begrenzungswand (20) im Endabschnitt (24b) oder im Beruhigungsabschnitt durch eine Schwenkbewegung des Endglieds (14) erzeugt wird.

8. Kommissionierroboter nach Anspruch 7,
**dadurch gekennzeichnet, dass**
die Steuerung (12) dazu ausgelegt ist, das Endglied (14) im Verlauf einer Schwenkbewegung zwischen dem Quellbehälter (30) und dem Zielbehälter (32) so zu steuern, dass ein Pendeln des Artikels (16) im Vergleich zu einer Steuerung mit unbeweglichem Endglied (14) reduziert wird.

9. Kommissionierroboter nach einem der vorhergehenden Ansprüche,
**dadurch gekennzeichnet, dass**
die Steuerung (12) dazu ausgelegt ist, aus den mit Hilfe der 3D-Kamera erfassten Daten eine Lücke zwischen Artikeln (16) im Zielbehälter (32) und/oder eine Lücke zwischen einem Artikel (16) und einer Wand des Zielbehälters (32) zu erkennen und, falls eine Lücke erkannt wurde, wenigstens einen Artikel (16) in dem Zielbehälter (32) mit Hilfe des Sauggreifers (18) oder eines andern Werkzeugs so zu verschieben, dass die Lücke geschlossen wird.

10. Verfahren zum Steuern eines Kommissionierroboters mit einem Sauggreifer (18) zum Greifen eines Artikels (16) und mit wenigstens einer 3D-Kamera zum Erfassen eines Zielbehälters (32), wobei das Verfahren das Bestimmen einer Trajektorie (24) des Sauggreifers (18) zum Aufnehmen eines Artikels (16) aus einem Quellbehälter (30) und zum Ablegen des Artikels (16) in dem Zielbehälter (32) umfasst,
wobei
das Verfahren das Bestimmen eines Ablageplatzes des Artikels (16) im Zielbehälter (32) und das Bestimmen wenigstens einer Begrenzungswand (20) im Zielbehälter (32) aus den Daten der 3D-Kamera (28) mit Hilfe einer Bildverarbeitungssoftware umfasst,
**dadurch gekennzeichnet, dass**
das Verfahren ferner das Bestimmen der Trajektorie (24) derart umfasst, dass
o sich der Artikel (16) in einem in einem Absenkabschnitt (24a) nach vertikal unten bewegt, so dass der Artikel (16) im Absenkabschnitt (24a) horizontal um einen Absenkabstand (A) gegenüber dem Ablageplatz versetzt ist und
∘ sich der Artikel (16) in einem Endabschnitt (24b) der Trajektorie (24), welcher dem Absenkabschnitt (24a) nachfolgt, an die Begrenzungswand (20) annähert oder dass der Artikel (16) in einem Beruhigungsabschnitt (24c) der Trajektorie (24) die Begrenzungswand (20) berührt,
wobei das Verfahren das Bestimmen einer Höher der Begrenzungswand (20) und das Bestimmen eines Startpunkts des Endabschnitts (24b) abhängig von der Höhe der Begrenzungswand (20) derart, dass er auf oder unterhalb der Höhe der Begrenzungswand (20) liegt, umfasst.

## Claims

1. Picking robot with a suction gripper (18) for gripping an article (16), including at least one 3D camera for detecting a target container (32) and a controller (12) for determining a trajectory (24) of the suction gripper (18) for picking up an article (16) from a source container (30) and for depositing the article (16) in the target container (32), wherein
the controller (12) is designed to determine, from the data of the 3D camera (28) with the aid of image processing software, a deposit location of the article (16) in the target container (32) and at least one vertical boundary wall (20) in the target container (32), **characterised in that** the controller is further designed to determine the trajectory (24) such that the article (16)
- moves vertically downwards in a lowering section (24a) and in so doing maintains a horizontal lowering distance (A) from the boundary wall (20), so that, in the lowering section (24a), the article (16) is offset horizontally by the lowering distance (A) relative to the deposit location, and
- approaches the boundary wall (20) in an end section (24b) of the trajectory (24), which follows the lowering section (24a), or that the article (16) touches the boundary wall (20) in a stabilising section (24c) of the trajectory (24),
- to determine a height of the boundary wall (20) and a height H of the article (16) and to determine a starting point of the end section (24b) as a function of the height of the boundary wall (20) and the height H of the article (16) such that it lies at or below the height of the boundary wall (20).

2. Picking robot according to claim 1,
**characterised by**
a horizontally aligned sensor (34) arranged above the source container (30) for detecting a height (H) of the article (16) when picking up the article (16) from the source container (30), wherein the controller (12) is designed to determine a starting point of the end section (24b) depending on the detected height (H).

3. Picking robot according to one of the preceding claims,
**characterised in that**
the controller (12) is designed to determine the trajectory (24) in such a way that the article (16) touches the boundary wall (20) at an end point of the end section (24b) of the trajectory (24).

4. Picking robot according to claim 3,
**characterised in that**
the controller (12) is designed to determine the trajectory (24) in such a way that the article (16) is pressed against the boundary wall (20) at an end point of the end section (24b) of the trajectory (24).

5. Picking robot according to one of the preceding claims,
**characterised in that**
the controller (12) is designed to determine two vertical boundary walls of the deposit location in the target container (32), which form an internal angle, and to determine the trajectory (24) such that the article (16) moves in an end section (24b) of the trajectory (24) in the direction of an apex of the internal angle.

6. Picking robot according to one of the preceding claims,
**characterised in that**
the controller (12) is designed to determine the trajectory (24) as a curvilinear interpolation from path curve points.

7. Picking robot according to one of the preceding claims,
**characterised by**
a gripper arm (22) with a pivotable or rotatable end member (14), wherein the approach of the article (16) to the boundary wall (20) in the end section (24b) or in the stabilising section is generated by a pivoting movement of the end member (14).

8. Picking robot according to claim 7,
**characterised in that**
the controller (12) is designed to control the end member (14) in the course of a swivelling movement between the source container (30) and the target container (32) in such a way that oscillation of the article (16) is reduced in comparison to a controller with a stationary end member (14).

9. Picking robot according to one of the preceding claims,
**characterised in that**
the controller (12) is designed to recognise a gap between articles (16) in the target container (32) and/or a gap between an article (16) and a wall of the target container (32) from the data recorded with the aid of the 3D camera and, if a gap has been detected, to displace at least one article (16) in the target container (32) with the aid of the suction gripper (18) or another tool in such a way that the gap is closed.

10. Method for controlling a picking robot with a suction gripper (18) for gripping an article (16) and with at least one 3D camera for detecting a target container (32), the method comprising determining a trajectory (24) of the suction gripper (18) for picking up an article (16) from a source container (30) and for depositing the article (16) in the target container (32),
wherein
the method comprises determining a deposit location of the article (16) in the target container (32) and determining at least one boundary wall (20) in the target container (32) from the data of the 3D camera (28) using image processing software, **characterised in that** the method further comprises determining the trajectory (24) such that
- the article (16) moves vertically downwards in a lowering section (24a), so that the article (16) in the lowering section (24a) is offset horizontally by a lowering distance (A) relative to the deposit location, and
- the article (16) approaches the boundary wall (20) in an end section (24b) of the trajectory (24), which follows the lowering section (24a), or that the article (16) touches the boundary wall (20) in a stabilising section (24c) of the trajectory (24),
wherein the method comprises determining a height of the boundary wall (20) and determining a starting point of the end portion (24b) depending on the height of the boundary wall (20) such that it is at or below the height of the boundary wall (20).

## Revendications

1. Robot de préparation de commandes comprenant une ventouse à vide (18) pour saisir un article (16), comprenant au moins une caméra 3D pour référencer un récipient cible (32) et une commande (12) pour déterminer une trajectoire (24) de la ventouse à vide (18) pour prendre un article (16) d'un récipient source (30) et pour déposer l'article (16) dans le récipient cible (32),
dans lequel
la commande (12) est conçue pour déterminer, à partir des données de la caméra 3D (28) à l'aide d'un logiciel de traitement d'images, un emplacement de dépose de l'article (16) dans le récipient cible (32) et au moins une paroi de délimitation verticale (20) dans le récipient cible (32) et
**caractérisé en ce que** la commande est en outre conçue pour
déterminer la trajectoire (24) de façon à ce que l'article (16)
- se déplace verticalement vers le bas dans un tronçon de descente (24a) et maintienne ainsi un écart de descente horizontal (A) par rapport à la paroi de délimitation (20) de façon à ce que l'article (16) dans le tronçon de descente (24a) soit décalé horizontalement de l'écart de descente (A) par rapport à l'emplacement de dépose, et
- dans un tronçon d'extrémité (24b) de la trajectoire (24) qui est consécutif au tronçon de descente (24a), se rapproche de la paroi de délimitation (20) ou que l'article (16) touche la paroi de délimitation (20) dans un tronçon de stabilisation (24c) de la trajectoire (24),
- pour déterminer une hauteur de la paroi de délimitation (20) et une hauteur H de l'article (16) et déterminer un point de départ du tronçon d'extrémité (24b) en fonction de la hauteur de la paroi de délimitation (20) et de la hauteur H de l'article (16) de telle sorte qu'il soit situé à la hauteur ou en-dessous de la hauteur de la paroi de délimitation (20).

2. Robot de préparation de commandes selon la revendication 1, **caractérisé par** un capteur (34) aligné horizontalement et disposé au-dessus du récipient source (30) pour détecter une hauteur (H) de l'article (16) lors de la prise de l'article (16) hors du récipient source (30), dans lequel la commande (12) est conçue pour déterminer un point de départ du tronçon d'extrémité (24b) en fonction de la hauteur (H) détectée.

3. Robot de préparation de commandes selon l'une des revendications précédentes, **caractérisé en ce que** la commande (12) est conçue pour déterminer la trajectoire (24) de telle façon que l'article (16) touche la paroi de délimitation (20) dans un point d'extrémité du tronçon d'extrémité (24b) de la trajectoire (24).

4. Robot de préparation de commandes selon la revendication 3, **caractérisé en ce que** la commande (12) est conçue pour déterminer la trajectoire (24) de telle façon que l'article (16) soit appuyé contre la paroi de délimitation (20) dans un point d'extrémité du tronçon d'extrémité (24b) de la trajectoire (24).

5. Robot de préparation de commandes selon l'une des revendications précédentes, **caractérisé en ce que** la commande (12) est conçue pour déterminer deux parois de délimitation verticales de l'emplacement de dépose dans le récipient cible (32) qui forment un angle interne et déterminent la trajectoire (24) de telle façon que l'article (16) se déplace dans un tronçon d'extrémité (24b) de la trajectoire (24) en direction d'un sommet de l'angle interne.
est conçue,.

6. Robot de préparation de commandes selon l'une des revendications précédentes, **caractérisé en ce que** la commande (12) est conçue pour déterminer la trajectoire (24) en tant qu'une interpolation curviligne de points de courbure de trajectoire.

7. Robot de préparation de commandes selon l'une des revendications précédentes, **caractérisé par** un bras préhenseur (22) avec un membre d'extrémité (14) pivotant ou rotatif, dans lequel le rapprochement de l'article (16) contre la paroi de délimitation (20) dans le tronçon d'extrémité (24b) ou dans le tronçon de stabilisation est produit par un pivotement du membre d'extrémité (14).

8. Robot de préparation de commandes selon la revendication 7, **caractérisé en ce que** la commande (12) est conçue pour piloter le membre d'extrémité (14) au cours d'un pivotement entre le récipient source (30) et le récipient cible (32) de telle façon qu'une oscillation de l'article (16) par rapport à une commande avec un membre d'extrémité (14) non mobile est réduite.

9. Robot de préparation de commandes selon l'une des revendications précédentes, **caractérisé en ce que** la commande (12) est conçue pour, à partir des données saisies à l'aide de la caméra 3D, déceler un espace vide entre des articles (16) dans le récipient cible (32) et/ou un espace vide entre un article (16) et une paroi du récipient cible (32) et, si un espace vide a été détecté, pousser au moins un article (16) dans le récipient cible (32) à l'aide de la ventouse à vide (18) ou d'un autre outil de façon à refermer l'espace vide.

10. Procédé pour piloter un robot de préparation de commandes comprenant une ventouse à vide (18) pour saisir un article (16) et comprenant au moins une caméra 3D pour référencer un récipient cible (32), dans lequel le procédé comprend de déterminer une trajectoire (24) de la ventouse à vide (18) pour prendre un article (16) d'un récipient source (30) et pour déposer l'article (16) dans le récipient cible (32), dans lequel
le procédé comprend de déterminer un emplacement de dépose de l'article (16) dans le récipient cible (32) et de déterminer au moins une paroi de délimitation (20) dans le récipient cible (32) à partir des données de la caméra 3D (28) à l'aide d'un logiciel de traitement d'images,
**caractérisé en ce que** le procédé comprend en outre de déterminer la trajectoire (24) de façon à ce que
l'article (16) se déplace verticalement vers le bas dans un tronçon de descente (24a) de façon à ce que l'article (16) dans le tronçon de descente (24a) soit décalé horizontalement d'un écart de descente (A) par rapport à l'emplacement de dépose, et
- l'article (16), dans un tronçon d'extrémité (24b) de la trajectoire (24) qui est consécutif au tronçon de descente (24a), se rapproche de la paroi de délimitation (20) ou que l'article (16) touche la paroi de délimitation (20) dans un tronçon de stabilisation (24c) de la trajectoire (24),
dans lequel le procédé comprend de déterminer une hauteur de la paroi de délimitation (20) et de déterminer un point de départ du tronçon d'extrémité (24b) en fonction de la hauteur de la paroi de délimitation (20) de telle sorte qu'il soit situé à la hauteur ou en-dessous de la hauteur de la paroi de délimitation (20).
